# EUROPEAN PATENT SPECIFICATION

(11) **EP 1 905 619 B1**
(45) Date of publication and mention of the grant of the patent: **09.04.2014**
(21) Application number: 07253793.9
(22) Date of filing: 25.09.2007
(51) Int. Cl.: F16F 9/32, B62K 25/04

(54) **Vehicle suspension**
Fahrzeugaufhängung
Suspension de véhicule

(30) Priority: 28.09.2006 JP 2006264558
(43) Date of publication of application: 02.04.2008
(73) Proprietor: Yamaha Hatsudoki Kabushiki Kaisha, Shizuoka-ken Shizuoka 438-8501 (JP)
(72) Inventor: Fukuda, Hiromi, Iwata-shi Shizuoka-ken 438-8501 (JP)
(74) Representative: Moreland, David

(56) References cited:
- DE-A1-102006 006 286
- JP-U- H0 448 445
- US-A1- 2004 222 788

## Description

### FIELD OF THE INVENTION

The present invention relates to a vehicle, and more particular, to a vehicle provided with a suspension device. The invention also relates to a suspension device for a vehicle.

### BACKGROUND OF THE INVENTION

Conventionally, there is known a vehicle provided with a hydraulic shock absorber (see, for example, Japanese Utility Model Registration No. 2585398 (Patent Document 1). Patent Document 1 discloses a vehicle provided with a hydraulic shock absorber, which comprises a bracket for mounting of the hydraulic shock absorber on a vehicle body, a piston rod mounted to the bracket, an electric motor provided in the piston rod, and a length of electrical wiring, which connects between the electric motor and a switch outside the suspension device. The wiring is passed through a through-hole, which extends through the bracket from an upper portion thereof to a side thereof while bending therein, to thereby connect between the electric motor and the switch.

The vehicle disclosed in Patent Document 1 described above has a disadvantage that the wiring is difficult to pass through a through-hole since the bracket is provided with the through-hole, which extends in the bracket from an upper portion thereof to a side thereof while bending therein. Therefore, there is caused a problem of a decrease in workability at the time of assembly.

An example of a prior art suspension system is described in DE102003006286, which describes a suspension system having front fork members. The front fork damps expansion and contractions when the front wheel and the vehicle body are displaced relative to one another. Each of the left and right fork members respectively, have outer tubes and inner tubes that operate in a telescopic manner.

Each of the left and right fork members are provided with a damping device and the left front fork member is provided with a detection device for detecting the degree of expansion/contraction of the left fork member and the right fork member. This detection is used to control the suspension using a damping device which comprises damping control valves.

A base valve for damping the contractions is provided within a cylinder tube part of the suspension. A cover part at the bottom of the base valve closes the bottom of the cylinder tube part. A lower part of the cover part is secured to the axle mount.

The base valve is provided with an insertion hole and a portion of the detection device is inserted through the insertion hole of the base valve. The other end of the sensor portion is mounted from the lower side of the cylinder part in a screw hole of the cover part of the base valve by a screw portion of a mounting member.

A portion of the axle bracket below the insertion hole of the cover part of the base valve is provided with an insertion hole that is greater than the outer diameter of the sensor member, so as to allow the sensor part and the fastening part to be connected with the cover part of the base valve via the fitting hole.

A groove for carrying electric wiring from the sensor is provided on the inner peripheral surface of a through hole for supporting an axle of the front wheel.

One object of an embodiment of the invention is to provide a vehicle provided with a suspension device, which is capable of achieving an improvement in workability at the time of assembly.

### SUMMARY OF THE INVENTION

Various aspects of the present invention are defined in the independent claims. Some preferred features are defined in the dependent claims.

Described herein by way of information is a vehicle comprising a wheel, a vehicle body, a suspension device provided between the wheel and the vehicle body to include a damping mechanism, which damps a telescopic force generated when the wheel and the vehicle body move relative to each other, a cylinder body, which accommodates therein the damping mechanism, and a cylinder head portion mounted to the cylinder body, and detecting means, one end portion of which is arranged in the cylinder body and which serves to detect a telescopic state when the wheel and the vehicle body move relative to each other, and wherein the cylinder head portion includes a first cylinder head portion, which closes an end of the cylinder body and which is provided a hole, through which the detecting means passes, and a second cylinder head portion including a mount mounted to one of the wheel and the vehicle body, and fixed to the first cylinder head portion in a manner to cover another portion of the detecting means.

In a vehicle described herein, the cylinder head portion mounted to the cylinder body includes the first cylinder head portion, which closes an end of the cylinder body and which is provided with a hole, into which the detecting means may be inserted during assembly, and a second cylinder head portion fixed to the first cylinder head portion in a manner to cover the other portion of the detecting means, the second cylinder head portion can be fixed to the first cylinder head portion after the detecting means is inserted into the hole of the first cylinder head portion when the detecting means is to be mounted, in a state, in which the other portion of the detecting means is arranged between the first cylinder head portion and the second cylinder head portion. Thereby, there is no need of providing a through-hole, through which the electrical wiring of the detecting means usually provided on the other portion of the detecting means should extend, on the second cylinder head portion. Thereby, unlike the case where a through-hole, through which the electrical wiring of the detecting means should extend, is provided on the whole cylinder head portion composed of the first cylinder head portion and the second cylinder head portion, it is not necessary to perform the work of passing the electrical wiring of the detecting means through a through-hole of the second cylinder head portion, so that it is possible to correspondingly achieve an improvement in workability at the time of assembly.

In a vehicle described herein, the detecting means includes a detection portion and electrical wiring connected to the detection portion and arranged to extend outside the suspension device, and the electrical wiring is covered by the second cylinder head portion. With such construction, it is possible to readily arrange the electrical wiring so as to have the same covered by the second cylinder head portion.

With an example of the vehicle described herein, preferably, the first cylinder head portion and the second cylinder head portion are fixed together by a plurality of fixing members, such as screw members. With such construction, it is possible to readily and firmly fix the first cylinder head portion and the second cylinder head portion together.

In this case, preferably, the screw member locations are arranged to be unsymmetrical with respect to a central axis of the cylinder body. With such construction, it is possible to inhibit the second cylinder head portion from being arranged in a position except a predetermined mount position on the first cylinder head portion, so that the second cylinder head portion can be made liable to be arranged in a predetermined mount position on the first cylinder head portion. Thereby, it is possible to further achieve an improvement in workability at the time of assembly.

In a vehicle, in which the screw members location are arranged to be unsymmetrical with respect to a central axis of the cylinder body, preferably, the first cylinder head portion and the second cylinder head portion are fixed together by three or more screw members and the three or more screw members are arranged so that at least one spacing out of the spacings of the mutually adjacent screw members locations is different from the other spacings. With such construction, it is possible to readily inhibit the second cylinder head portion from being arranged in a position except a predetermined mount position on the first cylinder head portion.

With the vehicle in one aspect, preferably, a positioning member for positioning of the second cylinder head portion relative to the first cylinder head portion is provided on at least one of the first cylinder head portion and the second cylinder head portion. With such construction, it is possible to readily arrange the second cylinder head portion in a predetermined mount position on the first cylinder head portion. Thereby, it is possible to further achieve an improvement in workability at the time of assembly.

With the vehicle in one aspect, preferably, a flange portion having a larger, external shape or dimension than that of the remaining portion of the detecting means is provided on the other end of the detection portion of the detecting means. With such construction, the flange portion having a larger, external shape than that of the remaining portion of the detecting means can be inhibited from being inserted into the hole when the detecting means is inserted into the hole of the first cylinder head portion from outside, so that it is possible to inhibit the whole detecting means from entering the hole. Thereby, it is possible to further achieve an improvement in workability at the time of assembly.

In a vehicle, in which the flange portion is provided on the other end of the detection portion of the detecting means, preferably, a recess, which accommodates therein the flange portion having a larger, external shape than that of the remaining portion of the detecting means, is provided on at least one of the first cylinder head portion and the second cylinder head portion. With such construction, the flange portion having a larger, external shape than that of the remaining portion of the detecting means can be arranged in a recess on at least one of the first cylinder head portion and the second cylinder head portion, so that it is possible to fix the second cylinder head portion to the first cylinder head portion in a manner to cover the other end side of the detection portion of the detecting means. Thereby, it is possible to achieve an improvement in workability at the time of assembly.

With the vehicle in one aspect, preferably, a groove portion, in which the electrical wiring of the detecting means is arranged, is provided on the first cylinder head portion. With such construction, the second cylinder head portion can be fixed to the first cylinder head portion in a state, in which the electrical wiring is arranged in the groove portion of the first cylinder head portion, after the detecting means is inserted into the hole of the first cylinder head portion, so that it is possible to readily perform the work of laying the electrical wiring. Thereby, it is possible to further effectively achieve an improvement in workability at the time of assembly. In other aspect a groove portion may be provided in the second cylinder head portion.

With the vehicle in one aspect, preferably, the detecting means includes a first thread portion on an outer periphery of that portion thereof, which is inserted into the insertion hole, the insertion hole of the first cylinder head portion includes a second thread portion, which engages with the first thread portion, and the first thread portion of the detecting means is screwed to the second thread portion of the insertion hole whereby the first thread portion is fixed to the first cylinder head portion. With such construction, the detecting means can be readily fixed to the first cylinder head portion whereby it is possible to achieve an improvement in workability at the time of assembly.

With the vehicle in one aspect, preferably, the suspension device further includes a push member, which pushes the detecting means against at least one of the first cylinder head portion and the second cylinder head portion. With such construction, the detecting means can be pushed against and fixed to at least one of the first cylinder head portion and the second cylinder head portion, so that it is possible to inhibit the detecting means from shifting after assembly.

With the vehicle in one aspect, preferably, a sealing member is provided between the insertion hole of the first cylinder head portion and the detecting means. With such construction, it is possible to inhibit an oil in the cylinder body from leaking outside from the insertion hole of the first cylinder head portion.

With the vehicle in one aspect, preferably, the suspension device further includes a rod portion mounted to the other of the side of the wheel and the side of the vehicle body and extending into the cylinder body, and a piston portion mounted to that portion of the rod portion, which extends into the cylinder body, and the detecting means functions to detect relative positions of that predetermined portion of the detection portion, which is arranged in the cylinder body, and at least one of the rod portion and the piston portion. With such construction, it is possible to use the detecting means to readily detect a telescopic state when the wheel and the vehicle body move relative to each other.

With the vehicle in one aspect, preferably, the wheel comprises a rear wheel and the suspension device includes a rear suspension arranged between the rear wheel and the vehicle body. In this manner, when the suspension device in one aspect is applied to a rear suspension, it is possible to obtain a vehicle provided with a rear suspension, which is capable of achieving an improvement in workability at the time of assembly.

The mount of the second cylinder head portion may be mounted to one of a side of the wheel and a side of the vehicle body, or in other aspects may be mounted centrally to one of the wheel or the vehicle.

Also described herein by way of information is a suspension device for a vehicle having a wheel and a body and being adapted for damping forces generated by relative movement between the wheel and the body, the suspension device including a damping mechanism, a cylinder body, which accommodates the damping mechanism, and a cylinder head portion mounted to the cylinder body, and
detecting means, one end portion of which is arranged in the cylinder body for detecting a condition of the damping mechanism, and
wherein the cylinder head portion includes
a first cylinder head portion, which closes an end of the cylinder body and which is provided with a hole, through which a portion of the detecting means extends, and
a second cylinder head portion including a mount adapted for mounting to one of the wheel and the vehicle body, and fixed to the first cylinder head portion in a manner to cover another portion of the detecting means.

Described herein by way of information is a vehicle comprising a wheel, a vehicle body, a suspension device provided between the wheel and the vehicle body to include a damping mechanism, which damps a telescopic force generated when the wheel and the vehicle body move relative to each other, a cylinder body, which accommodates therein the damping mechanism, and a cylinder head portion mounted to the cylinder body, and detecting means, one end of which is arranged in the cylinder body and which serves to detect a telescopic state when the wheel and the vehicle body move relative to each other, and wherein the cylinder head portion includes a first cylinder head portion, which closes an end of the cylinder body and which is provided with an insertion hole, into which the detecting means is inserted, and a second cylinder head portion including a mount mounted to one of a side of the wheel and a side of the vehicle body, and fixed to the first cylinder head portion in a manner to cover the other end side of the detecting means.

### BRIEF DESCRIPTION OF THE DRAWINGS

An embodiment of the invention will be described below with reference to the drawings.
Fig. 1 is a side view showing a whole construction of a motorcycle according to an embodiment of the invention.
Fig. 2 is a cross sectional view taken along the line 100-100 in Fig. 4.
Fig. 3 is a cross sectional view taken along the line 200-200 in Fig. 4.
Fig. 4 is a plan view illustrating a construction of a rear suspension of a motorcycle according to a first embodiment of the invention.
Fig. 5 is a view illustrating the process of mounting a detection device to the rear suspension of the motorcycle according to the first embodiment of the invention.
Fig. 6 is a view illustrating the process of mounting a detection device to the rear suspension of the motorcycle according to the first embodiment of the invention.
Fig. 7 is a cross sectional view illustrating a construction of a rear suspension of a motorcycle according to a second embodiment of the invention.
Fig. 8 is a plan view illustrating the construction of the rear suspension of the motorcycle according to the second embodiment of the invention.
Fig. 9 is a view illustrating the process of mounting a detection device to the rear suspension of the motorcycle according to the second embodiment of the invention.
Fig. 10 is a cross sectional view illustrating a construction of a rear suspension of a motorcycle according to a third embodiment of the invention.
Fig. 11 is a plan view illustrating the construction of the rear suspension of the motorcycle according to the third embodiment of the invention.
Fig. 12 is a view illustrating the process of mounting a detection device to the rear suspension of the motorcycle according to the third embodiment of the invention.
Fig. 13 is a view illustrating a construction of a rear suspension of a motorcycle according to a fourth embodiment of the invention.

### DETAILED DESCRIPTION OF THE DRAWINGS

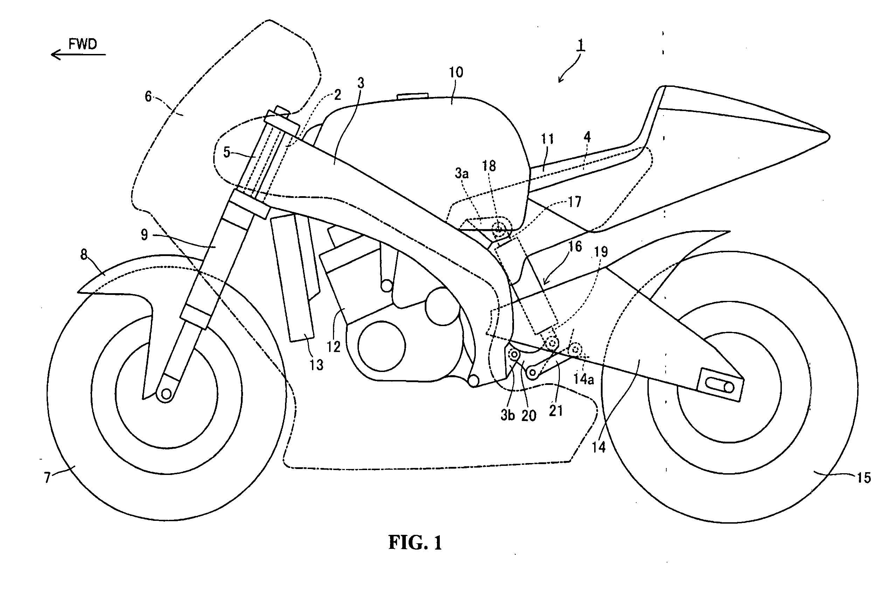

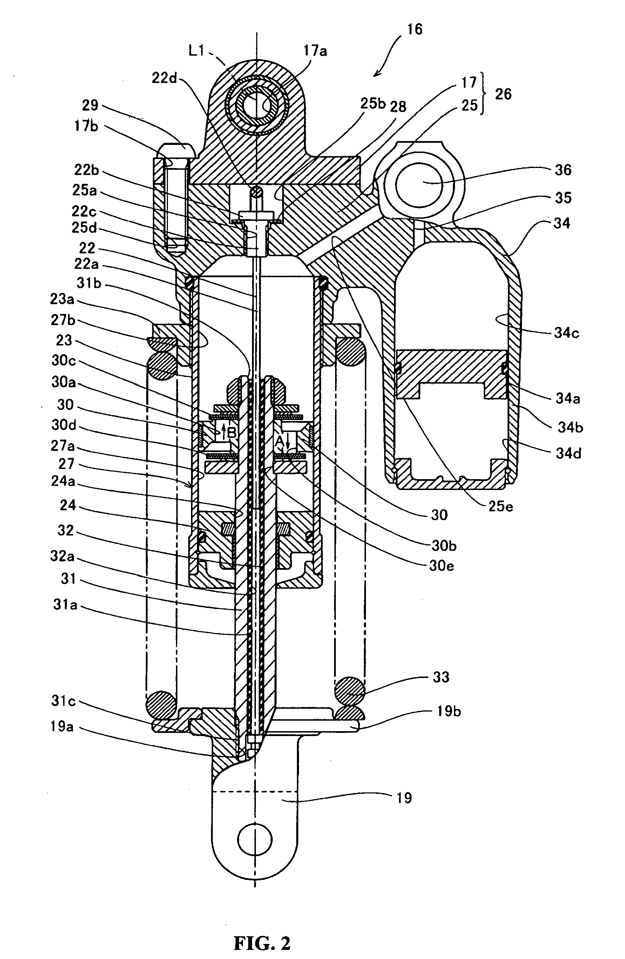

Fig. 1 is a side view showing a whole construction of a motorcycle according to a first embodiment of the invention. Figs. 2 to 4 are views illustrating, in detail, a construction of a rear suspension of the motorcycle, according to the first embodiment, shown in Fig. 1. In addition, the first embodiment is described with respect to a motorcycle as an example of a vehicle of the invention. In the drawings, an arrow FWD indicates the front in a traveling direction of a motorcycle. A construction of the motorcycle 1 according to the first embodiment of the invention will be described below in detail with reference to Figs. 1 to 4.

With the motorcycle 1 according to the first embodiment of the invention, a main frame 3 is arranged rearwardly of a head pipe 2 as shown in Fig. 1. Also, a seat rail 4 is connected to the main frame 3. A body frame is constituted by the head pipe 2, the main frame 3, and the seat rail 4. In addition, the head pipe 2, the main frame 3, and the seat rail 4 are an example of "vehicle body" in the invention.

Also, as shown in Fig. 1, a steering shaft 5 is mounted to the head pipe 2. A handle bar (not shown) is mounted to an upper portion of the steering shaft 5. Also, a front cowl or fairing 6 is provided forwardly of the head pipe 2 to cover the front of the head pipe 2. Also, a front wheel 7 and a front fender 8 arranged above the front wheel 7 are arranged below the front cowl 6. The front wheel 7 is mounted rotatably to lower ends of a pair of front forks 9. The front forks 9 function to damp a telescopic or compression force generated when the front wheel 7 and the vehicle body move relative to each other.

Also, a fuel tank 10 is arranged on an upper portion of the main frame 3. Also, a seat 11 is arranged rearwardly of the fuel tank 10. Also, an engine 12 is mounted below the main frame 3. Also, an air cleaner 13 is provided forwardly of the engine 12 to purify an air supplied to the engine 12. Also, a pivot shaft (not shown) is provided rearwardly of the main frame 3. A front end of a rear arm 14 is supported by the pivot shaft to be able to swing vertically. A rear wheel 15 is mounted rotatably to a rear end of the rear arm 14. In addition, the rear wheel 15 is an example of "wheel" in the invention.

Also, a support 3a is provided above a rear portion of the main frame 3. A mount 17a of an upper cylinder head portion 17, which functions as an upper mount for a rear suspension unit 16, is mounted to the support 3a by a shaft member 18. In addition, the rear suspension unit 16 is an example of a "suspension device" of an embodiment of the invention and the upper cylinder head portion 17 is an example of "cylinder head portion" and "second cylinder head portion" of an embodiment of the invention. A lower mount 19 of the rear suspension unit 16 is mounted to a swing member 20, which is provided to be able to swing about a support 3b provided below the rear portion of the main frame 3. A lower portion of the swing member 20 is connected to a support 14a of the rear arm 14 by a connecting member 21. Thereby, as the rear arm 14 swings vertically, the swing member 20 swings about the support 3b of the main frame 3 and enables the rear suspension unit 16 to contract and extend (make a telescopic motion).

Also, in this particular example only one rear suspension unit 16 is provided. Also, the rear suspension unit 16 is provided with a detection device 22, which serves to detect the degree of compression or extension of the unit 16. In the illustrated embodiments parts of the unit 16 translate relative to one another in a telescopic manner and thus the degree of extension or contraction of the unit 16 may be indicated with reference to the telescopic state, and the compression and extension forces experienced by the unit may be expressed in terms of telescopic force. Of course, those of skill in the art will understand that the utility of the present invention is not restricted to telescopic suspension units and that references to, for example, telescopic force or telescopic state are not intended to exclude suspension units which are adapted to extend or contract without parts of the unit moving relative to one another in a telescopic manner, although the device 22 of this embodiment senses a telescopic condition of the rear suspension 16 as shown in Fig. 2. The detection device 22 includes a detection portion 22a formed to be rod-shaped. In addition, the detection portion 22a comprises a displacement sensor portion, which makes use of a change of a coil in inductance, and functions to detect a length (length corresponding to a particular telescopic condition or amount) of that portion, which is inserted into an insertion hole 32a of a pipe member 32 described later and made of a non-magnetic body. A damping characteristic is controlled by a damping regulation valve (not shown) on the basis of a detected length.

Here, according to the first embodiment, a flange portion 22b having a larger, external shape than that of the remaining portion of the detection device 22 and a thread formed portion 22c arranged below the flange portion 22b are provided on the other end of the detection portion 22a. Also, one end of electrical wiring 22d is connected to the flange portion 22b on the other end of the detection portion 22a. In addition, the detection device 22 is an example of "detecting means" in the invention and the thread formed portion 22c is an example of "first thread portion" in the invention.

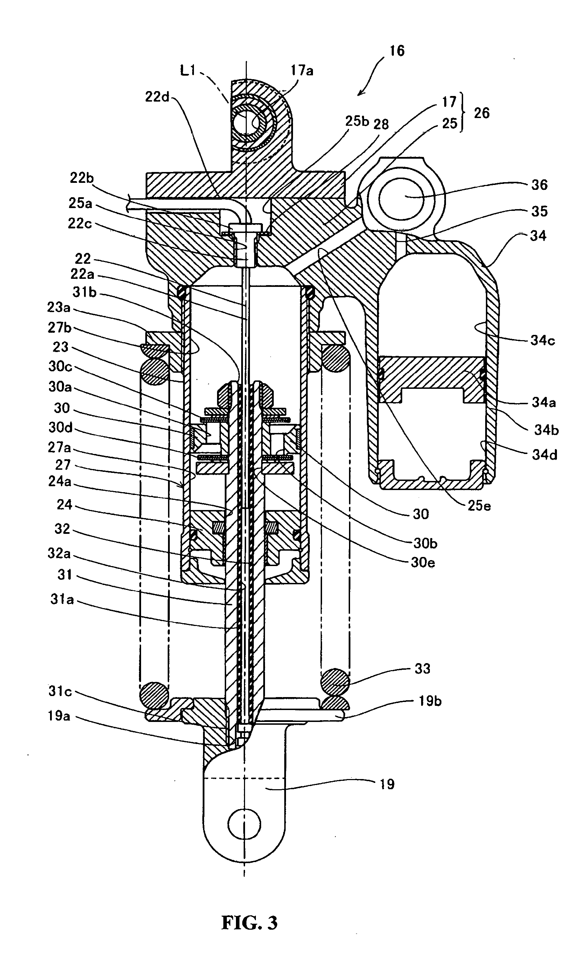

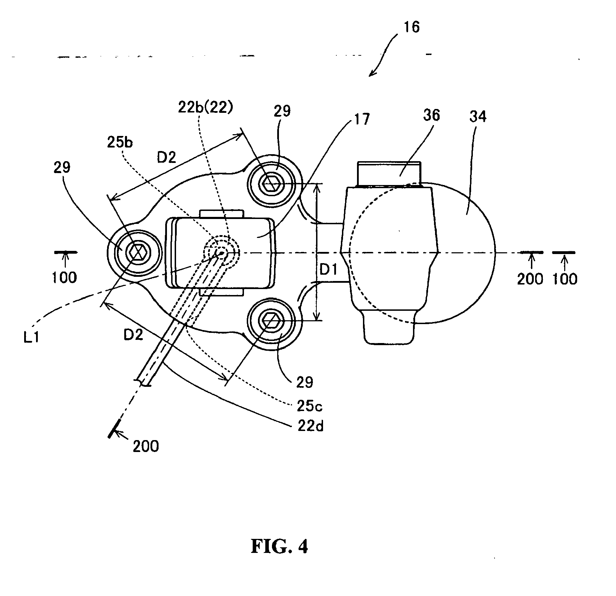

Also, a cylinder pipe portion 23 having a cylindrical shape is arranged to surround the detection device 22. In addition, the cylinder pipe portion 23 is an example of "cylinder body" in the invention. Also, a flange portion 23a is fixed to an outer peripheral surface of the cylinder pipe portion 23. Also, a lid body 24 having an insertion hole 24a is mounted to a lower portion of an inner peripheral surface of the cylinder pipe portion 23. Also, provided on an upper portion of the cylinder pipe portion 23 is a lower cylinder head portion 25 formed with a threaded hole 25a, which has a smaller, inside diameter than an outside diameter of the flange portion 22b of the detection device 22. The lower cylinder head portion 25 and the upper cylinder head portion 17 constitute a cylinder head portion 26. In addition, the lower cylinder head portion 25 is an example of "cylinder head portion" and "first cylinder head portion" in the invention and the threaded hole 25a is an example of "insertion hole" and "second thread portion" in the invention. The threaded hole 25a has the same center line as a central axis of the cylinder pipe portion 23 and is provided to permit the thread formed portion 22c of the detection device 22 to be detachably screwed thereto. In addition, a cylinder portion 27 of the rear suspension 16 is constituted by the cylinder pipe portion 23, the lid body 24, the lower cylinder head portion 25, and the upper cylinder head portion 17. Also, a recess 25b having a circular-shaped inner peripheral surface is formed above the threaded hole 25a of the lower cylinder head portion 25. Also, a sealing washer 28 is provided between the flange portion 22b and a bottom surface of the recess 25b. In addition, the sealing washer 28 is an example of "sealing member" in the invention. The sealing washer 28 functions to inhibit oil in the cylinder portion 27 from leaking outside. Also, a groove portion 25c is formed on an upper surface of the lower cylinder head portion 25 to extend to an outside surface of the lower cylinder head portion 25 from the recess 25b and to have a depth capable of accommodating the electrical wiring 22d of the detection device 22. The groove portion 25c enables arranging the other end of the electrical wiring 22d of the detection device 22 to extend the same to an outside of the rear suspension 16 as shown in Figs. 3 and 4.

Also, according to the first embodiment, the upper cylinder head portion 17 is fixed to an upper portion of the lower cylinder head portion 25 in a manner to cover an upper end of the detection portion 22a of the detection device 22. That is, the upper cylinder head portion 17 is mounted to cover the recess 25b and the groove portion 25c, in which the electrical wiring 22d of the lower cylinder head portion 25 is arranged. Also, as shown in Fig. 4, three threaded holes 25d (see Fig. 2) are formed on the lower cylinder head portion 25 (see Fig. 2) to be equally distant from a central axis L1 of the cylinder portion 27 (see Fig. 2) and three screw insertion holes 17b are formed on the upper cylinder head portion 17 to be positioned corresponding to the three threaded holes 25d of the lower cylinder head portion 25. Three screw members 29 are inserted into the respective screw insertion holes 17b and then clamped to the respective threaded holes 25d. The three screw members 29 (the threaded holes 25d and the screw insertion holes 17b) are arranged to be unsymmetrical with respect to the central axis L1 of the cylinder portion 27. That is, as shown in Fig. 4, the three screw members 29 (the threaded holes 25d and the three screw insertion holes 17b) are arranged so that three intervals, respectively, among the mutually adjacent three screw members 29 (the threaded holes 25d and the three screw insertion holes 17b) are D1 (about 48 mm), D2 (about 51 mm), and D2 (about 51 mm). That is, the arrangement is such that only one (D1) among the three intervals is different from the remainder.

Also, a piston portion 30 is arranged in the cylinder portion 27 as shown in Fig. 2. In addition, the piston portion 30 is an example of "damping mechanism" in the invention. Also, a plurality of orifices 30a and 30b for passage of an oil are formed on the piston portion 30. The plurality of orifices 30a function to permit an oil in a lower oil chamber 27a below the piston portion 30 to pass to an upper oil chamber 27b. Also, the plurality of orifices 30b function to permit an oil in the upper oil chamber 27b above the piston portion 30 to pass to the lower oil chamber 27a disposed below. Also, a plurality of plate-shaped washers 30c are arranged above the plurality of orifices 30a and 30b and stacked in a plate-shaped manner to close upper surfaces of the orifices 30a and open upper surfaces of the orifices 30b. Also, a plurality of plate-shaped washers 30d are arranged below the plurality of orifices 30a and 30b and stacked in a plate-shaped manner to open lower surfaces of the orifices 30a and close lower surfaces of the orifices 30b.

Also, a rod portion 31 is inserted into and fixed to an insertion hole 30e of the piston portion 30. The rod portion 31 is provided with an insertion hole 31a, into which the detection portion 22a of the detection device 22 is inserted. In addition, the cylinder portion 27, the piston portion 30, and the rod portion 31 constitute a damping mechanism of the rear suspension 16. Also, an end 31b on that side (upper side) of the insertion hole 31a of the rod portion 31, through which the detection portion 22a is inserted, is formed to be tapered so that an open width is increased upward. Also, a pipe member 32 made of a non-magnetic body and having an insertion hole 32a, into which the other end of the detection portion 22a is inserted, is inserted into and fixed to the insertion hole 31a of the rod portion 31.

Also, a threaded portion 31c provided on an outer periphery of a lower end of the rod portion 31 is fixed to a threaded hole 19a of the lower mount 19. A compression spring 33 is arranged between an upper surface of a flange portion 19b of the lower mount 19 and a lower surface of the flange portion 23a.

Also, a reservoir tank portion 34 is provided integrally with the lower cylinder head portion 25. The reservoir tank portion 34 is formed with a cylinder portion 34b, which includes a piston portion 34a therein. Also, the cylinder portion 34b is composed of an oil chamber 34c above the piston portion 34a and a gas chamber 34d below the piston portion 34a. The oil chamber 34c of the cylinder portion 34b is connected to the upper oil chamber 27b through oil passages 35 and 25e. A damping member 36 is provided between the oil passages 35 and 25e. Also, the gas chamber 34d is filled with an air to have an internal pressure of about 1 MPa.

Subsequently, an operation of the rear suspension 16 of the motorcycle 1 according to the first embodiment will be described with reference to Fig. 2.

First, an explanation is given to the case where a force in a direction of contraction acts on the rear suspension 16 (see Fig. 2). When a force in a direction of contraction acts on the rear suspension 16, the rear suspension 16 is contracted against the bias of the compression spring 33 (see Fig. 2) whereby a damping force is generated.

Specifically, as shown in Fig. 2, when a force in a direction of contraction acts on the rear suspension 16 and thereby the piston portion 30 and the rod portion 31 rise relative to the cylinder portion 27, oil pressure in the upper oil chamber 27b increases, so that the washers 30d of the piston portion 30 are opened. Oil in the upper oil chamber 27b flows through the orifices 30b of the piston portion 30 in A direction to flow into the lower oil chamber 27a. Also, when oil pressure in the upper oil chamber 27b increases, oil in the upper oil chamber 27b flows into the reservoir tank portion 34 through the oil passages 25e and 35. In this case, a damping force is generated by resistance, with which oil flows through the orifices 30b of the piston portion 30, and a damping force is generated by a damping member 36, which is provided between the oil passages 25e and 35.

Subsequently, an explanation is given to the case where a force in a direction of extension acts on the rear suspension 16. When a force in the direction of extension acts on the rear suspension 16, the rear suspension 16 is extended whereby a damping force is generated.

Specifically, when a force in the direction of extension acts on the rear suspension 16 and thereby the piston portion 30 and the rod portion 31 descend relative to the cylinder portion 27, oil pressure in the lower oil chamber 27a increases, so that the washers 30c of the piston portion 30 are opened. Oil in the lower oil chamber 27a flows through the orifices 30a of the piston portion 30 in B direction to flow into the upper oil chamber 27b. At this time, since the upper oil chamber 27b is increased in volume, oil in the reservoir tank portion 34 flows into the upper oil chamber 27b through the oil passages 35 and 25e. In this case, a damping force is generated by resistance, with which oil flows through the orifices 30a of the piston portion 30, and a damping force is generated by the damping member 36, which is provided between the oil passages 35 and 25e.

Also, when the rear suspension 16 is contracted or extended, the detection portion 22a of the detection device 22 moves relatively in the rod portion 31 whereby a change in inductance is generated. Based on a change in inductance, a length (length corresponding to an amount of contraction or extension) of that portion of the detection portion 22a, which is inserted into the insertion hole 32a of the pipe member 32 made of a non-magnetic body, is detected, and a desired damping characteristic is obtained by controlling a damping regulation valve (not shown) on the basis of a detected length.

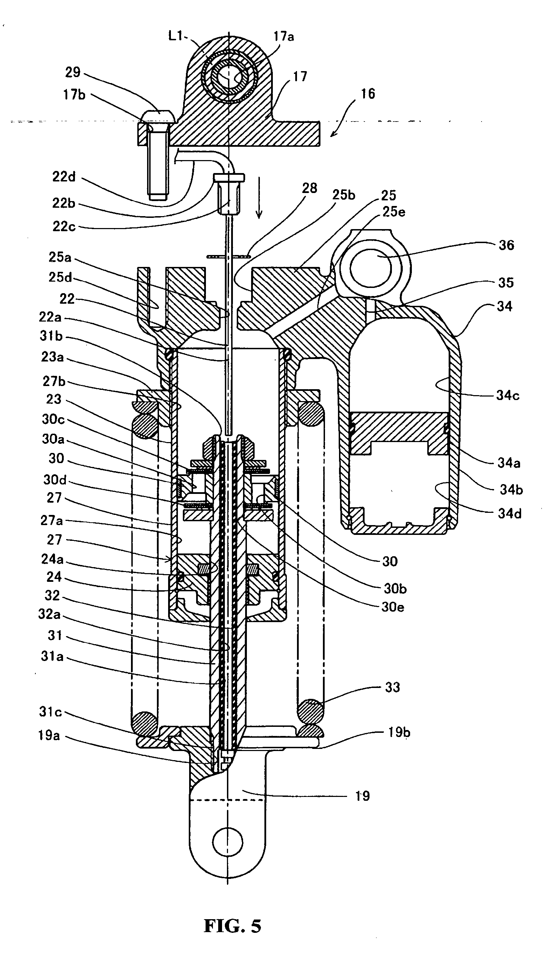

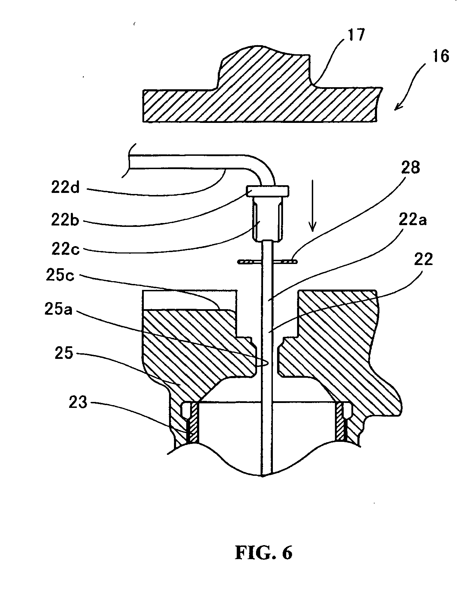

Figs. 5 and 6 are views illustrating a process of assembling the detection device to the rear suspension of the motorcycle according to the first embodiment. Subsequently, the process of assembling the detection device 22 to the rear suspension 16 of the motorcycle 1 according to the first embodiment will be described with reference to Figs. 2 to 6.

First, as shown in Fig. 5, the detection portion 22a of the detection device 22 is inserted, from outside (above), into the threaded hole 25a of the lower cylinder head portion 25 and the insertion hole 32a of the pipe member 32 made of a non-magnetic body and inserted into the insertion hole 31a of the rod portion 31. At this time, the sealing washer 28 is arranged in a manner to interpose between the flange portion 22b and the recess 25b of the lower cylinder head portion 25. The thread formed portion 22c formed on the detection device 22 is clamped to the threaded hole 25a.

Subsequently, the electrical wiring 22d connected to the flange portion 22b is arranged in the groove portion 25c of the lower cylinder head portion 25 as shown in Fig. 6, and the other end of the electrical wiring 22d is taken out as shown in Fig. 4.

Thereafter, as shown in Figs. 2 to 4, the three screw insertion holes 17b of the upper cylinder head portion 17 are arranged corresponding to the three threaded holes 25d of the lower cylinder head portion 25 and fixed by means of the three screw members 29. In this manner, mounting of the detection device 22 to the rear suspension 16 is completed.

According to the first embodiment, the cylinder head portion 26 mounted to the cylinder portion 27 is constructed to comprise the lower cylinder head portion 25, which closes one side of the cylinder portion 27 and is provided with the threaded hole 25a, into which the detection device 22 is inserted, and the upper cylinder head portion 17 fixed to the lower cylinder head portion 25 in a manner to cover the other side of the detection portion 22a of the detection device 22, whereby the upper cylinder head portion 17 can be fixed to the lower cylinder head portion 25 after the detection device 22 is inserted into the threaded hole 25a of the lower cylinder head portion 25 when the detection device 22 is to be mounted, in a state, in which the electrical wiring 22d connected to the other end of the detection portion 22a of the detection device 22 is arranged between the upper cylinder head portion 17 and the lower cylinder head portion 25. Thereby, there is no need of providing a through-hole, through which the electrical wiring 22d of the detection device 22 should extend, on the lower cylinder head portion 25. Thereby, unlike the case where a through-hole, through which the electrical wiring 22d of the detection device 22 should extend, is provided on the whole cylinder head portion 26 composed of the upper cylinder head portion 17 and the lower cylinder head portion 25, it is not necessary to perform the work of passing the electrical wiring 22d of the detection device 22 through a through-hole of the upper cylinder head portion 17, so that it is possible to correspondingly achieve an improvement in workability at the time of assembly.

Also, according to the first embodiment, the upper cylinder head portion 17 and the lower cylinder head portion 25 are fixed together by means of the three screw members 29 and the three screw members 29 (the threaded holes 25d and the three screw insertion holes 17b) are arranged so that intervals among the mutually adjacent three screw members 29 (the threaded holes 25d and the three screw insertion holes 17b) are D1 (about 48 mm), D2 (about 51 mm), and D2 (about 51 mm), whereby it is possible to readily inhibit the upper cylinder head portion 17 from being fixed in a position except a predetermined mount position on the lower cylinder head portion 25, so that the upper cylinder head portion 17 can be made liable to be arranged in the predetermined mount position on the lower cylinder head portion 25. Thereby, it is possible to achieve a further improvement in workability at the time of assembly.

Also, according to the first embodiment, the flange portion 22b having a larger, external shape than that of the remaining portion of the detection device 22 is provided on the other end of the detection portion 22a and the threaded hole 25a of the lower cylinder head portion 25 is formed to have a smaller, inside diameter than an outside diameter of the flange portion 22b of the detection device 22, whereby the flange portion 22b having a larger, external shape than that of the remaining portion of the detection device 22 can be inhibited from being inserted into the threaded hole 25a when the detection portion 22a of the detection device 22 is inserted into the threaded hole 25a of the lower cylinder head portion 25 from outside, so that it is possible to inhibit the whole detection device 22 from entering the threaded hole 25a. Thereby, it is possible to achieve a further improvement in workability at the time of assembly.

Also, according to the first embodiment, the groove portion 25c for arrangement of the electrical wiring 22d of the detection device 22 is provided on the lower cylinder head portion 25 whereby the upper cylinder head portion 17 can be fixed to the lower cylinder head portion 25 in a state, in which the electrical wiring 22d is arranged in the groove portion 25c of the lower cylinder head portion 25, after the detection portion 22a of the detection device 22 is inserted into the threaded hole 25a of the lower cylinder head portion 25, so that it is possible to readily perform the work of laying the electrical wiring 22d. Thereby, it is possible to further effectively achieve an improvement in workability at the time of assembly.

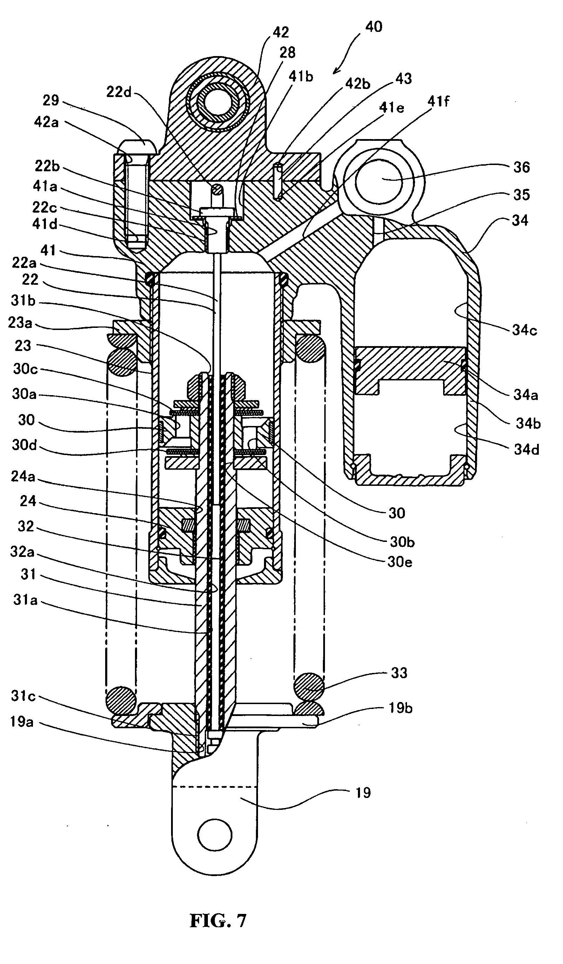

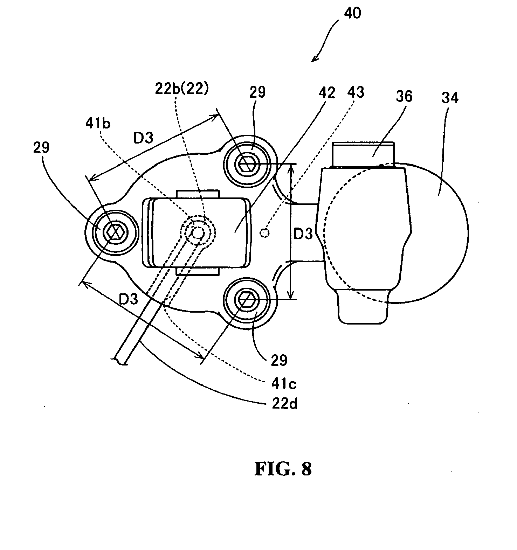

Figs. 7 and 8 are views illustrating, in detail, a construction of a rear suspension of a motorcycle according to a second embodiment of the invention. Unlike the first embodiment, an example is described referring to Figs. 7 and 8, in which according to a second embodiment a positioning pin 43 is provided for mounting of an upper cylinder head portion 42 in a predetermined position on a lower cylinder head portion 41.

According to the second embodiment, the lower cylinder head portion 41 having a threaded hole 41a is provided on an upper portion of a cylinder pipe portion 23. The threaded hole 41a has the same center line as a central axis of the cylinder pipe portion 23 and is provided to permit a thread formed portion 22c of a detection device 22 to be screwed thereto. In addition, the lower cylinder head portion 41 is an example of "cylinder head portion" and "first cylinder head portion" in the invention and the threaded hole 41a is an example of "insertion hole" and "second threaded portion" in the invention. Also, a recess 41b having a circular-shaped inner peripheral surface is formed above the threaded hole 41a of the lower cylinder head portion 41. Also, a groove portion 41c is formed on an upper surface of the lower cylinder head portion 41 to extend to an outside surface of the lower cylinder head portion 41 from the recess 41b and to have a depth capable of accommodating an electrical wiring 22d of the detection device 22.

Also, an upper cylinder head portion 42 functioning as an upper mount is fixed to an upper portion of the lower cylinder head portion 41. In addition, the upper cylinder head portion 42 is an example of "cylinder head portion" and "second cylinder head portion" in the invention.

Also, according to the second embodiment, as shown in Fig. 8, three threaded holes 41d (see Fig. 7) are formed on the lower cylinder head portion 41 (see Fig. 7) to be equally distant from a central axis L1 of a cylinder portion 27 (see Fig. 7) and three screw insertion holes 42a are formed on the upper cylinder head portion 42 to be positioned corresponding to the three threaded holes 41d of the lower cylinder head portion 41. Three screw members 29 are inserted into the respective the screw insertion holes 42a and then clamped to the respective threaded holes 41d. Also, as shown in Fig. 8, the three screw members 29 (the threaded holes 41d and the respective three screw insertion holes 42a) are arranged so that three intervals among the mutually adjacent three screw members 29 (the threaded holes 41d and the respective three screw insertion holes 42a) become the same distance D3 (about 51 mm).

Here, according to the second embodiment, as shown in Fig. 7, the positioning pin 43 is provided to position the upper cylinder head portion 42 in a predetermined position on the lower cylinder head portion 41. The positioning pin 43 is press fitted into a pin hole 41e, into which the positioning pin 43 provided on the lower cylinder head portion 41 is inserted, and provided so as to project above an upper surface of the lower cylinder head portion 41. Also, the upper cylinder head portion 42 is provided with a pin hole 42b, into which the positioning pin 43 is inserted. In addition, the positioning pin 43 is an example of "positioning member" in the invention.

In addition, the remaining construction and operation of the second embodiment are the same as the construction of the first embodiment.

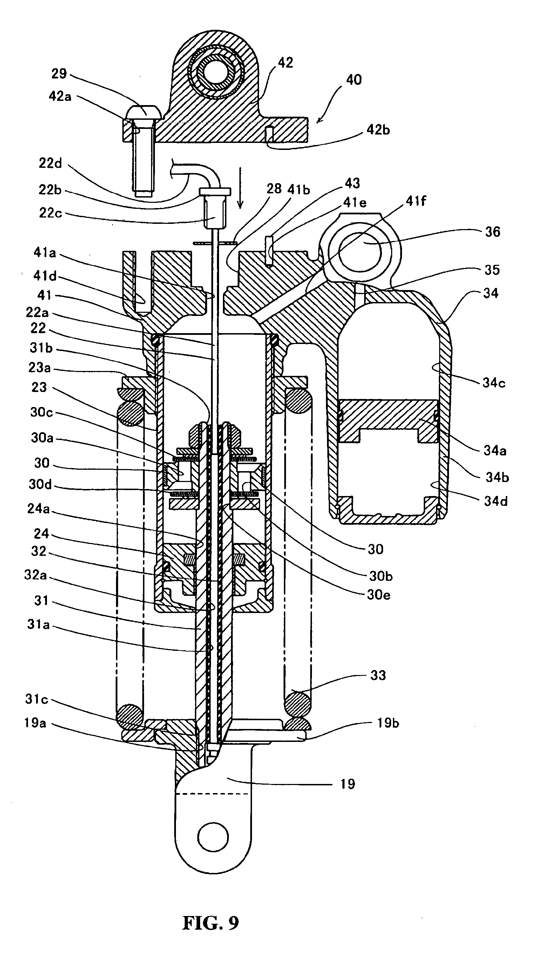

Fig. 9 is a view illustrating a process of mounting the detection device to a rear suspension of a motorcycle according to the second embodiment. Subsequently, the process of mounting the detection device 22 to the rear suspension 40 of the motorcycle according to the second embodiment will be described with reference to Figs. 8 and 9.

According to the second embodiment, as shown in Figs. 8 and 9, after the other end of an electrical wiring 22d is taken out, the three screw insertion holes 42a of the upper cylinder head portion 42 are arranged in a manner to correspond to the three threaded holes 41d of the lower cylinder head portion 41. At this time, the pin hole 42b of the upper cylinder head portion 42 is fitted onto the positioning pin 43 press fitted into the pin hole 41e of the lower cylinder head portion 41. Thereby, the upper cylinder head portion 42 is arranged in a predetermined mount position on the lower cylinder head portion 41. The upper cylinder head portion 42 arranged in the predetermined mount position is fixed to the lower cylinder head portion 41 by means of three screw members 29.

In addition, the remaining process of assembling the detection device according to the second embodiment is the same as the process of assembling the detection device according to the first embodiment.

According to the second embodiment, as described above, the positioning pin 43 for positioning of the upper cylinder head portion 42 on the lower cylinder head portion 41 is provided and the pin hole 42b for insertion thereinto of the positioning pin 43 is provided on the upper cylinder head portion 42 whereby it is possible to readily arrange the upper cylinder head portion 42 in the predetermined mount position on the lower cylinder head portion 41.

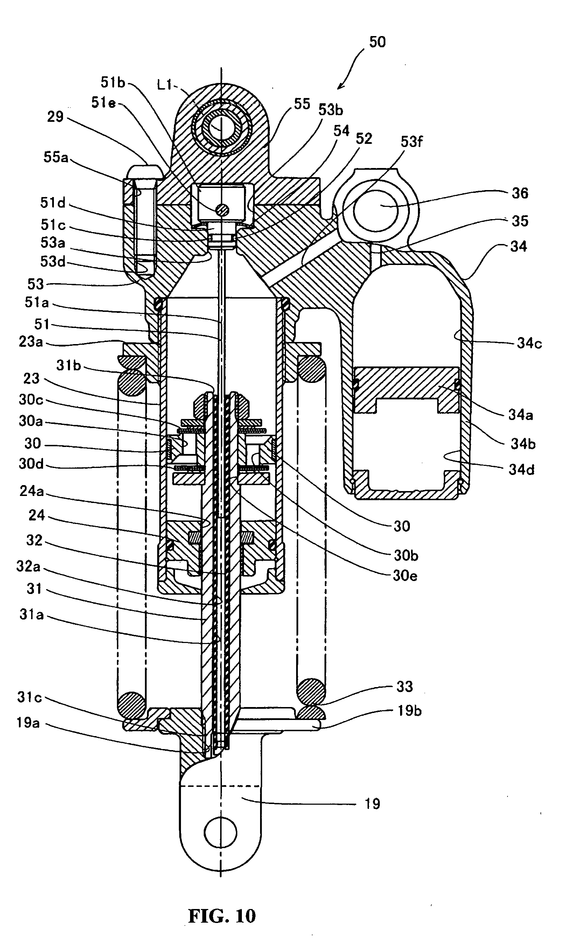

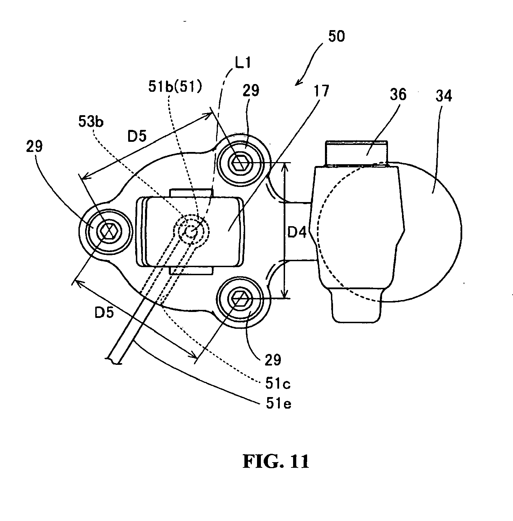

Figs. 10 and 11 are views illustrating, in detail, a construction of a rear suspension of a motorcycle according to a third embodiment of the invention. Unlike the first and second embodiments, an example is described referring to Figs. 10 and 11, in which according to the third embodiment a detection device 51 is fixed by interposing a conical washer 54 between a flange portion 51b of the detection device 51 and a lower cylinder head portion 53 and thereby pushing an upper surface of the flange portion 51b against an upper cylinder head portion 55.

According to the third embodiment, a rear suspension 50 is provided with the detection device 51, which detects a telescopic amount of the rear suspension 50 as shown in Fig. 10. The detection device 51 includes a detection portion 51a formed to be rod-shaped.

Here, according to the third embodiment, a flange portion 51b having a larger, external shape than that of the remaining portion of the detection device 51 and an insertion portion 51d arranged below the flange portion 51b and having an O-ring engagement groove 51c are provided on the other end of the detection portion 51a. An O-ring 52 made of rubber is fitted into the O-ring engagement groove 51c of the insertion portion 51d. Also, one end of an electrical wiring 51e is connected to the flange portion 51b. In addition, the detection device 51 is an example of "detecting means" in the invention and the O-ring 52 is an example of "sealing member" in the invention.

Also, according to the third embodiment, the lower cylinder head portion 53 having an insertion hole 53a is provided on an upper portion of a cylinder pipe portion 23. The insertion hole 53a has the same center line as a central axis of the cylinder pipe portion 23 and is sealed by the O-ring 52 fitted into the O-ring engagement groove 51c of the detection device 51. In addition, the lower cylinder head portion 53 is an example of "cylinder head portion" and "first cylinder head portion" in the invention. Also, a recess 53b having a circular-shaped inner peripheral surface is formed above the insertion hole 53a of the lower cylinder head portion 53. Also, the conical washer 54 having a spring function is arranged between the recess 53b and the flange portion 51b. Thereby, an upper surface of the flange portion 51b is pushed against a lower surface of the upper cylinder head portion 55 to be thereby fixed thereto. In addition, the upper cylinder head portion 55 is an example of "cylinder head portion" and "second cylinder head portion" in the invention, and the conical washer 54 is an example of "push member" in the invention. Also, a groove portion 53c is formed on an upper surface of the lower cylinder head portion 53 to extend to an outside surface of the lower cylinder head portion 53 from the recess 53b and to have a depth capable of accommodating the electrical wiring 51e.

Also, according to the third embodiment, as shown in Fig. 11, three threaded holes 53d (see Fig. 10) are formed on the lower cylinder head portion 53 (see Fig. 10) to be equally distant from a central axis L1 of a cylinder portion 27 (see Fig. 10) and three screw insertion holes 55a are formed on the upper cylinder head portion 55 to be positioned corresponding to the three threaded holes 53d. Three screw members 29 are inserted into the respective screw insertion holes 55a and then clamped to the respective threaded holes 53d. The three screw members 29 (the threaded holes 53d and the three screw insertion holes 55a) are arranged to be unsymmetrical with respect to the central axis L1 of the cylinder portion 27. That is, as shown in Fig. 11, the three screw members 29 (the threaded holes 53d and the three screw insertion holes 55a) are arranged so that three intervals, respectively, among the mutually adjacent three screw members 29 (the threaded holes 53d and the three screw insertion holes 55a) are D4 (about 48 mm), D5 (about 51 mm), and D5 (about 51 mm). That is, the arrangement is such that only one (D4) among the three intervals is different from the remainder.

In addition, the remaining construction and operation of the third embodiment are the same as the construction of the first embodiment.

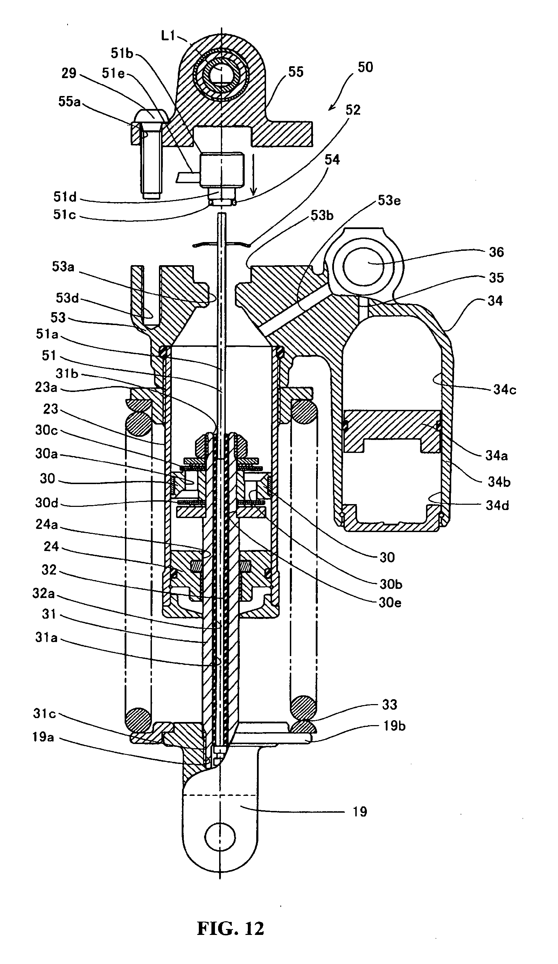

Fig. 12 is a view illustrating a process of mounting the detection device to a rear suspension of a motorcycle according to the third embodiment. Subsequently, the process of mounting the detection device 51 to the rear suspension 50 of the motorcycle according to the third embodiment will be described with reference to Figs. 11 and 12.

According to the third embodiment, as shown in Fig. 12, the detection portion 51a of the detection device 51 with the O-ring 52 fitted into the O-ring engagement groove 51c is inserted, from outside (above), into the insertion hole 53a of the lower cylinder head portion 53 and the insertion hole 32a of the pipe member 32 made of a non-magnetic body and inserted into the insertion hole 31a of the rod portion 31. At this time, the conical washer 54 is arranged in a manner to interpose between the flange portion 51b and the recess 53b of the lower cylinder head portion 53.

Subsequently, as shown in Figs. 11 and 12, the electrical wiring 51e connected to the flange portion 51b is arranged in the groove portion 53c of the lower cylinder head portion 53 and the other end of the electrical wiring 51e is taken out.

Thereafter, the three screw insertion holes 55a of the upper cylinder head portion 55 are arranged corresponding to the three threaded holes 53d of the lower cylinder head portion 53 and fixed by means of the three screw members 29. In this manner, mounting of the detection device 51 to the rear suspension 50 is completed.

According to the third embodiment, by providing the conical washer 54, which pushes the detection device 51 against the upper cylinder head portion 55, the detection device 51 can be pushed against and fixed to the upper cylinder head portion 55 by the conical washer 54, so that it is possible to inhibit the detection device 51 from shifting after assembly.

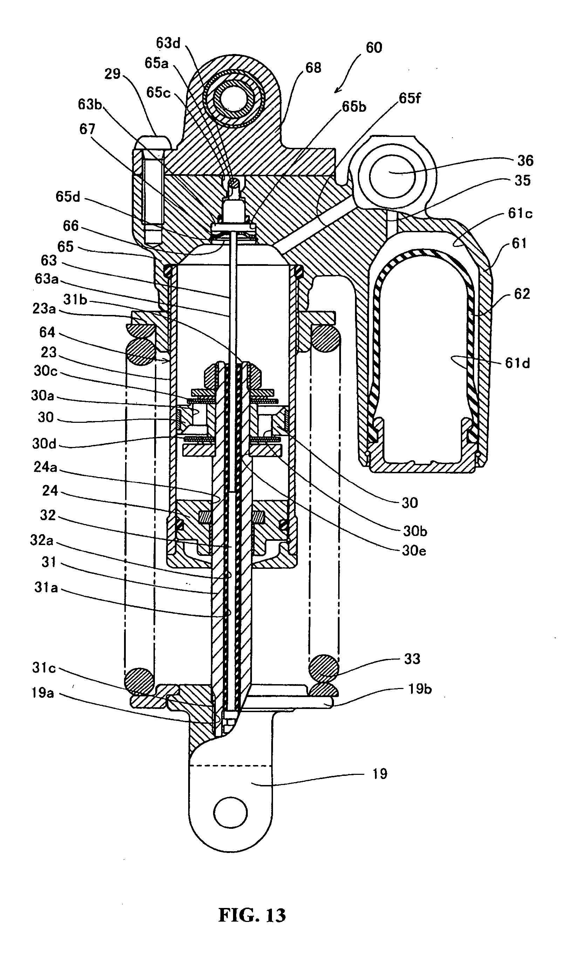

Fig. 13 is a view illustrating, in detail, a construction of a rear suspension of a motorcycle according to a fourth embodiment of the invention. Unlike the first, second, and second embodiments, an example is described referring to Fig. 13, in which according to the fourth embodiment a detection device 63 is mounted from inside a cylinder portion 64 and a bladder 62 made of rubber is provided in a reservoir tank 61.

According to the fourth embodiment, as shown in Fig. 13, the bladder 62 made of rubber is provided to partition a gas chamber 61d and an oil chamber 61c in the reservoir tank 61 of a rear suspension 60. In addition, the rear suspension 60 is an example of "suspension device" in the invention. Also, the detection device 63 is constructed to be mounted from inside the cylinder portion 64.

Specifically, a lower cylinder head portion 65 is provided with an insertion hole 65a, a recess 65b formed on an underside (inner side of the cylinder portion 64) of the lower cylinder head portion 65, and a groove portion 65c. The detection device 63 is inserted into the insertion hole 65a of the lower cylinder head portion 65 from under (a side toward the cylinder pipe portion 23) and a flange portion 63b is arranged in the recess 65b of the lower cylinder head portion 65. In this case, an engagement groove 65d is provided on the lower cylinder head portion 65 to inhibit the detection device 63 from shifting and a C-ring 66 is arranged in the engagement groove 65d. A conical washer 67 is arranged between the C-ring 66 and the flange portion 63b to push the detection device 63 against the lower cylinder head portion 65. In addition, the detection device 63 is an example of "detecting means" in the invention and the lower cylinder head portion 65 is an example of "cylinder head portion" and "first cylinder head portion" in the invention. Also, the conical washer 67 is an example of "push member" in the invention.

Also, according to the fourth embodiment, the groove portion 65c for arrangement of an electrical wiring 63d of the detection device 63 is provided on the lower cylinder head portion 65 whereby an upper cylinder head portion 68 can be fixed to the lower cylinder head portion 65 in a state, in which the electrical wiring 63d is arranged in the groove portion 65c of the lower cylinder head portion 65, after the detection device 63 is inserted into the insertion hole 65a of the lower cylinder head portion 65 from under (a side toward the cylinder pipe portion 23), so that it is possible to readily perform the work of laying the electrical wiring 63d. Thereby, it is possible to further effectively achieve an improvement in workability at the time of assembly. In addition, the upper cylinder head portion 68 is an example of "cylinder head portion" and "second cylinder head portion" in the invention.

In addition, it should be thought that all the embodiments disclosed herein are exemplary in all respects and not limitative. The scope of the invention is indicated by the claims rather than the foregoing descriptions of the embodiments, and all changes within the scope of the claims are intended to be embraced therein.

For example, while the first to fourth embodiments illustrate a motorcycle as an example of a vehicle provided with a suspension device, the invention is not limited thereto but applicable to other vehicles such as bicycle, three-wheeler, ATV (All Terrain Vehicle), etc. as far as the vehicle is provided with a suspension device. Indeed, the suspension device may have utility in a vehicle provided with ground engaging members other than wheels, such as tracks, skids or skis.

Also, while the first to fourth embodiments illustrate an example, in which the invention is applied to a rear suspension as an example of a suspension device including a damping mechanism, the invention is not limited thereto but applicable to other suspension devices than a rear suspension.

Also, while the third embodiment illustrates an example, in which a conical washer (push member) is provided on a lower cylinder head portion (first cylinder head), the invention is not limited thereto but a conical washer (push member) may be provided on an upper cylinder head portion (second cylinder head).

### Description of Reference Numerals and Signs

1: motorcycle (vehicle)
2: head pipe (vehicle body)
3: main frame (vehicle body)
4: seat rail (vehicle body)
15: rear wheel (wheel)
16, 40, 50, 60: rear suspension (suspension device)
17, 42, 55, 68: upper cylinder head portion (cylinder head portion, second cylinder head)
17a: mount
22, 51, 63: detection device (detecting means)
22a, 51a, 63a: detection portion
22b, 51b, 63b: flange portion
22c: thread formed portion (first thread portion)
22d, 51d, 63d: electrical wiring
25, 41, 53, 65: lower cylinder head portion (cylinder head portion, first cylinder head)
25a, 41a: threaded hole (insertion hole, second thread portion) 25b, 41b, 53b, 65b: recess
25c, 41c, 53c, 65c: groove portion
27: cylinder portion (cylinder body)
28: sealing washer (sealing member)
29: screw member
30: piston portion (damping mechanism)
31: rod portion
43: positioning pin (positioning member)
52: O-ring (sealing member)
53a: insertion hole
54, 67: conical washer (push member)

## Claims

1. A vehicle (1) comprising
a wheel (15),
a vehicle body (3),
a suspension device (16) provided between the wheel (15) and the vehicle body (3) to include a damping mechanism (30), which damps a telescopic force generated when the wheel (15) and the vehicle body (3) move relative to each other, a cylinder body (27), which accommodates therein the damping mechanism (30), and a cylinder head portion (26) mounted to the cylinder body (27), and
detecting means (22), one end portion (22a) of which is arranged in the cylinder body (27) and which serves to detect a telescopic state when the wheel (15) and the vehicle body (3) move relative to each other, and
wherein the cylinder head portion (26) includes
a first cylinder head portion (25), which closes an end of the cylinder body (27) and which is provided with a hole (25a), through which the detecting means (22) extends, and
a second cylinder head portion (17) including a mount (17a) mounted to one of the wheel (15) and the vehicle body (3), and fixed to the first cylinder head portion (25) in a manner to cover another portion of the detecting means (22b, 22c); wherein
the detecting means (22) includes
a detection portion (22a) and
electrical wiring (22d) connected to the other portion of the detection portion (22b, 22c) and arranged to extend outside the suspension device (16), **characterized in that**
at least a portion of the electrical wiring (22d) is arranged between the first cylinder head portion (25) and the second cylinder head portion (17).

2. The vehicle of claim 1, wherein the first and second cylinder head portions (25, 17) are fixed together by one or more fixing members (29).

3. The vehicle according to any preceding claim, wherein the first cylinder head portion (25) and the second cylinder head portion (17) are fixed together by a plurality of screw members (29).

4. The vehicle according to claim 3, wherein the screw member locations are arranged to be unsymmetrical with respect to a central axis of the cylinder body (L1).

5. The vehicle according to claim 4, wherein the first cylinder head portion (25) and the second cylinder head portion (17) are fixed together by three or more screw members (29) and
the three or more screw members (29) are arranged so that at least one spacing (D1) out of the spacings (D1, D2) of mutually adjacent screw members (29) is different from the other spacings (D2).

6. The vehicle according to any preceding claim, wherein a positioning member (43) for positioning of the second cylinder head portion (42) relative to the first cylinder head portion (41) is provided on at least one of the first cylinder head portion (41) and the second cylinder head portion (42).

7. The vehicle according to any preceding claim, wherein a flange portion (22b) having a larger, external dimension than that of the remaining portion of the detecting means (22c) is provided on the other end of the detection portion of the detecting means (22a).

8. The vehicle according to claim 7, wherein a recess (25b), which accommodates therein the flange portion (22b) having a larger, external dimension than that of the remaining portion of the detecting means, is provided on at least one of the first cylinder head portion (25) and the second cylinder head portion (17).

9. The vehicle according to any preceding claim, wherein a groove portion, in which a part of the detecting means (22d) is arranged, is provided on the first cylinder head portion (25).

10. The vehicle according to any preceding claim, wherein the detecting means includes a first thread portion (22c) on an outer periphery of that portion, which is insertable into the hole (25a),
the hole of the first cylinder head portion includes a second thread portion (25a), which engages with the first thread portion (22c), and
the first thread portion of the detecting means (22c) is screwed to the second thread portion of the insertion hole (25a) whereby the first thread portion (22c) is fixed to the first cylinder head portion (25).

11. The vehicle according to any preceding claim, wherein the suspension device (50;60) further includes a push member (54;67), which pushes the detecting means (22) against at least one of the first cylinder head portion (53;65) and the second cylinder head portion (55; 68).

12. The vehicle according to any preceding claim, further comprising a sealing member (28) between the hole of the first cylinder head portion (25a) and the detecting means (22).

13. The vehicle according to any preceding claim, wherein the suspension device further includes a rod portion (31) mounted to the other of the wheel (15) and the vehicle body (3) and extending into the cylinder body (27), and a piston portion mounted (30) to that portion of the rod portion, which extends into the cylinder body (27), and
the detecting means (22) functions to detect relative positions of that portion of the detection portion (22a), which is arranged in the cylinder body (27), and at least one of the rod portion (31) and the piston portion (30).

14. The vehicle according to any preceding claim, wherein the wheel comprises a rear wheel (15) and
the suspension device includes a rear suspension (16) arranged between the rear wheel (15) and the vehicle body (3).

15. The vehicle of any preceding claim wherein the mount (17a) of the second cylinder head portion is mounted to one of a side of the wheel (15) and a side of the vehicle body (3).

16. The vehicle of any preceding claim, wherein the detecting means (22) is insertable through the hole (25a) in the first cylinder head portion (25).

17. A suspension device (16) for a vehicle (1) having a wheel (15) and a body (3) and being adapted for damping forces generated by relative movement between the wheel (15) and the body (3), the suspension device (16) including a damping mechanism (30), a cylinder body (27), which accommodates the damping mechanism (30), and a cylinder head portion (26) mounted to the cylinder body (27), and
detecting means (22), one end portion (22a) of which is arranged in the cylinder body (27) for detecting a condition of the damping mechanism (30), and
wherein the cylinder head portion (26) includes
a first cylinder head portion (25), which closes an end of the cylinder body (27)_and which is provided with a hole (25a), through which a portion of the detecting means (22) extends, and
a second cylinder head portion (17) including a mount (17a) adapted for mounting to one of the wheel (15) and the vehicle body (3), and fixed to the first cylinder head portion (25) in a manner to cover another portion of the detecting means (22b, 22c) ); wherein
the detecting means (22) includes
a detection portion (22a) and
electrical wiring (22d) connected to the other portion of the detection portion (22b, 22c) and arranged to extend outside the suspension device (16), **characterized in that**
at least a portion of the electrical wiring (22d) is arranged between the first cylinder head portion (25) and the second cylinder head portion (17).

18. The vehicle of claim 1, wherein
the hole (25a) is an insertion hole (25a), into which the detecting means (22) is inserted, and
the mount (17a) is mounted to one of a side of the wheel (15) and a side of the vehicle body (3), and is fixed to the first cylinder head portion (25) in a manner to cover the other end side of the detecting means (22b, 22c).

## Patentansprüche

1. Fahrzeug (1), das aufweist:
ein Rad (15);
eine Fahrzeugkarosserie (3);
eine Aufhängevorrichtung (16), die zwischen dem Rad (15) und der Fahrzeugkarosserie (3) vorhanden ist, um einzuschließen: einen Dämpfungsmechanismus (30), der eine teleskopische Kraft dämpft, die erzeugt wird, wenn sich das Rad (15) und die Fahrzeugkarosserie (3) relativ zueinander bewegen; einen Zylinderkörper (27), der darin den Dämpfungsmechanismus (30) aufnimmt; und einen Zylinderkopfabschnitt (26), der am Zylinderkörper (27) montiert ist; und
eine Erfassungseinrichtung (22), wobei ein Endabschnitt (22a) davon im Zylinderkörper (27) angeordnet ist und dazu dient, einen teleskopischen Zustand zu erfassen, wenn sich das Rad (15) und die Fahrzeugkarosserie (3) relativ zueinander bewegen, und
wobei der Zylinderkopfabschnitt (26) umfasst:
einen ersten Zylinderkopfabschnitt (25), der ein Ende des Zylinderkörpers (27) verschließt, und der mit einem Loch (25a) versehen ist, durch das sich die Erfassungseinrichtung (22) erstreckt; und
einen zweiten Zylinderkopfabschnitt (17), der eine Halterung (17a) umfasst, die an einem von Rad (15) und Fahrzeugkarosserie (3) montiert und am ersten Zylinderkopfabschnitt (25) in einer Weise befestigt ist, dass ein weiterer Abschnitt der Erfassungseinrichtung (22b, 22c) bedeckt wird; wobei
die Erfassungseinrichtung (22) umfasst:
einen Erfassungsabschnitt (22a); und
eine elektrische Verdrahtung (22d), die mit dem anderen Abschnitt des Erfassungsabschnittes (22b, 22c) verbunden und so angeordnet ist, dass sie sich außerhalb der Aufhängevorrichtung (16) erstreckt,
**dadurch gekennzeichnet, dass**
mindestens ein Abschnitt der elektrischen Verdrahtung (22d) zwischen dem ersten Zylinderkopfabschnitt (25) und dem zweiten Zylinderkopfabschnitt (17) angeordnet ist.

2. Fahrzeug nach Anspruch 1, bei dem der erste und der zweite Zylinderkopfabschnitt (25, 17) miteinander mittels eines oder mehrerer Befestigungselemente (29) befestigt werden.

3. Fahrzeug nach einem der vorhergehenden Ansprüche, bei dem der erste Zylinderkopfabschnitt (25) und der zweite Zylinderkopfabschnitt (17) miteinander mittels einer Vielzahl von Schraubenelementen (29) befestigt werden.

4. Fahrzeug nach Anspruch 3, bei dem die Stellen der Schraubenelemente so angeordnet sind, dass sie mit Bezugnahme auf eine Mittelachse des Zylinderkörpers (L1) unsymmetrisch sind.

5. Fahrzeug nach Anspruch 4, bei dem der erste Zylinderkopfabschnitt (25) und der zweite Zylinderkopfabschnitt (17) miteinander mittels drei oder mehreren Schraubenelementen (29) befestigt werden, und
die drei oder mehreren Schraubenelemente (29) so angeordnet sind, dass mindestens ein Abstand (D1) von den Abständen (D1, D2) der einander benachbarten Schraubenelemente (29) vom anderen Abstand (D2) verschieden ist.

6. Fahrzeug nach einem der vorhergehenden Ansprüche, bei dem ein Positionierelement (43) für das Positionieren des zweiten Zylinderkopfabschnittes (42) relativ zum ersten Zylinderkopfabschnitt (41) an mindestens einem von erstem Zylinderkopfabschnitt (41) und zweitem Zylinderkopfabschnitt (42) vorhanden ist.

7. Fahrzeug nach einem der vorhergehenden Ansprüche, bei dem ein Flanschabschnitt (22b) mit einer größeren Außenabmessung als die des restlichen Abschnittes der Erfassungseinrichtung (22c) am anderen Ende des Erfassungsabschnittes der Erfassungseinrichtung (22a) vorhanden ist.

8. Fahrzeug nach Anspruch 7, bei dem eine Aussparung (25b), die darin den Flanschabschnitt (22b) aufnimmt, und die eine größere Außenabmessung aufweist als die des restlichen Abschnittes der Erfassungseinrichtung, an mindestens einem von erstem Zylinderkopfabschnitt (25) und zweitem Zylinderkopfabschnitt (17) vorhanden ist.

9. Fahrzeug nach einem der vorhergehenden Ansprüche, bei dem ein Nutenabschnitt, in dem ein Teil der Erfassungseinrichtung (22d) angeordnet ist, beim ersten Zylinderkopfabschnitt (25) vorhanden ist.

10. Fahrzeug nach einem der vorhergehenden Ansprüche, bei dem die Erfassungseinrichtung einen ersten Gewindeabschnitt (22c) an einem äußeren Umfang jenes Abschnittes umfasst, der in das Loch (25a) eingesetzt werden kann,
wobei das Loch des ersten Zylinderkopfabschnittes einen zweiten Gewindeabschnitt (25a) umfasst, der mit dem ersten Gewindeabschnitt (22c) in Eingriff kommt, und
wobei der erste Gewindeabschnitt der Erfassungseinrichtung (22c) auf den zweiten Gewindeabschnitt des Einsetzloches (25a) geschraubt wird, wodurch der erste Gewindeabschnitt (22c) am ersten Zylinderkopfabschnitt (25) befestigt wird.

11. Fahrzeug nach einem der vorhergehenden Ansprüche, bei dem die Aufhängevorrichtung (50; 60) außerdem ein Druckelement (54; 67) umfasst, das die Erfassungseinrichtung (22) gegen mindestens einen von erstem Zylinderkopfabschnitt (53; 65) und zweitem Zylinderkopfabschnitt (55; 68) drückt.

12. Fahrzeug nach einem der vorhergehenden Ansprüche, das außerdem ein Dichtungselement (28) zwischen dem Loch des ersten Zylinderkopfabschnittes (25a) und der Erfassungseinrichtung (22) aufweist.

13. Fahrzeug nach einem der vorhergehenden Ansprüche, bei dem die Aufhängevorrichtung außerdem umfasst: einen Stababschnitt (31), der am anderen von Rad (15) und Fahrzeugkarosserie (3) montiert ist und sich in den Zylinderkörper (27) hinein erstreckt; und einen Kolbenabschnitt (30), der an jenem Teil des Stababschnittes montiert ist, der sich in den Zylinderkörper (27) hinein erstreckt, und
bei dem die Erfassungseinrichtung (22) funktioniert, um relative Positionen jenes Teils des Erfassungsabschnittes (22a), der im Zylinderkörper (27) angeordnet ist, und mindestens eine von Stababschnitt (31) und Kolbenabschnitt (30) zu erfassen.

14. Fahrzeug nach einem der vorhergehenden Ansprüche, bei dem das Rad ein Hinterrad (15) aufweist und
die Aufhängevorrichtung eine hintere Aufhängung (16) umfasst, die zwischen dem Hinterrad (15) und der Fahrzeugkarosserie (3) angeordnet ist.

15. Fahrzeug nach einem der vorhergehenden Ansprüche, bei dem die die Halterung (17a) des zweiten Zylinderkopfabschnittes an einer von einer Seite des Rades (15) und einer Seite der Fahrzeugkarosserie (3) montiert ist.

16. Fahrzeug nach einem der vorhergehenden Ansprüche, bei dem die Erfassungseinrichtung (22) durch das Loch (25a) im ersten Zylinderkopfabschnitt (25) eingesetzt werden kann.

17. Aufhängevorrichtung (16) für ein Fahrzeug (1) mit einem Rad (15) und einer Karosserie (3) und ausgebildet für die Dämpfungskräfte, die durch eine relative Bewegung zwischen dem Rad (15) und der Karosserie (3) erzeugt werden, wobei die Aufhängevorrichtung (16) umfasst: einen Dämpfungsmechanismus (30); einen Zylinderkörper (27), der den Dämpfungsmechanismus (30) aufnimmt; und einen Zylinderkopfabschnitt (26), der am Zylinderkörper (27) montiert ist, und mit
einer Erfassungseinrichtung (22), wobei ein Endabschnitt (22a) davon im Zylinderkörper (27) angeordnet ist, um einen Zustand des Dämpfungsmechanismus (30) zu erfassen, und
wobei der Zylinderkopfabschnitt (26) umfasst:
einen ersten Zylinderkopfabschnitt (25), der ein Ende des Zylinderkörpers (27) verschließt, und der mit einem Loch (25a) versehen ist, durch das sich ein Abschnitt der Erfassungseinrichtung (22) erstreckt; und
einen zweiten Zylinderkopfabschnitt (17), der eine Halterung (17a) umfasst, die für ein Montieren an einem von Rad (15) und Fahrzeugkarosserie (3) ausgebildet und am ersten Zylinderkopfabschnitt (25) in einer Weise befestigt ist, dass ein weiterer Abschnitt der Erfassungseinrichtung (22b, 22c) bedeckt wird; wobei
die Erfassungseinrichtung (22) umfasst:
einen Erfassungsabschnitt (22a); und
eine elektrische Verdrahtung (22d), die mit dem anderen Abschnitt des Erfassungsabschnittes (22b, 22c) verbunden und so angeordnet ist, dass sie sich außerhalb der Aufhängevorrichtung (16) erstreckt,
**dadurch gekennzeichnet, dass**
mindestens ein Abschnitt der elektrischen Verdrahtung (22d) zwischen dem ersten Zylinderkopfabschnitt (25) und dem zweiten Zylinderkopfabschnitt (17) angeordnet ist.

18. Fahrzeug nach Anspruch 1, bei dem
das Loch (25a) ein Einsetzloch (25a) ist, in das die Erfassungseinrichtung (22) eingesetzt wird, und
die Halterung (17a) an einer von einer Seite des Rades (15) und einer Seite der Fahrzeugkarosserie (3) montiert und am ersten Zylinderkopfabschnitt (25) in einer Weise befestigt wird, dass die andere Endseite der Erfassungseinrichtung (22b, 22c) bedeckt wird.

## Revendications

1. Véhicule (1) comprenant
une roue (15),
une carrosserie de véhicule (3),
un dispositif de suspension (16) prévu entre la roue (15) et la carrosserie de véhicule (3) pour inclure un mécanisme d'amortissement (30) qui amortit une force télescopique générée lorsque la roue (15) et la carrosserie de véhicule (3) bougent l'une par rapport à l'autre, un corps de cylindre (27) dans lequel est logé le mécanisme d'amortissement (30) et une partie de tête de cylindre (26) montée sur le corps de cylindre (27), et
un moyen de détection (22) dont une partie d'extrémité (22a) est disposée dans le corps de cylindre (27) et qui sert à détecter un état télescopique lorsque la roue (15) et la carrosserie de véhicule (3) bougent l'une par rapport à l'autre, et
dans lequel la partie de tête de cylindre (26) comprend
une première partie de tête de cylindre (25) qui ferme une extrémité du corps de cylindre (27) et qui est pourvue d'un trou (25a) à travers lequel le moyen de détection (22) s'étend et
une seconde partie de tête de cylindre (17) incluant un support (17a) monté sur la roue (15) ou sur la carrosserie de véhicule (3) et fixé sur la première partie de tête de cylindre (25) de manière à couvrir une autre partie du moyen de détection (22b, 22c); dans lequel
le moyen de détection (22) comprend
une partie de détection (22a) et
un câblage électrique (22d) connecté à l'autre partie de la partie de détection (22b, 22c) et disposé de manière à s'étendre à l'extérieur du dispositif de suspension (16),
**caractérisé par le fait qu'**au moins une partie du câblage électrique (22d) est située entre la première partie de tête de cylindre (25) et la seconde partie de tête de cylindre (17).

2. Véhicule selon la revendication 1, dans lequel les première et seconde parties de tête de cylindre (25, 17) sont fixées l'une à l'autre par un ou plusieurs éléments de fixation (29).

3. Véhicule selon l'une quelconque des revendications précédentes, dans lequel la première partie de tête de cylindre (25) et la seconde partie de tête de cylindre (17) sont fixées l'une à l'autre par une pluralité d'éléments filetés (29).

4. Véhicule selon la revendication 3, dans lequel les éléments filetés sont disposés de manière non symétrique par rapport à un axe central (L1) du corps de cylindre.

5. Véhicule selon la revendication 4, dans lequel la première partie de tête de cylindre (25) et la seconde partie de tête de cylindre (17) sont fixées l'une à l'autre par au moins trois éléments filetés (29) et
les au moins trois éléments filetés (29) sont disposés de manière à ce qu'au moins une distance (D1) parmi les distances (D1, D2) entre des éléments filetés (29) mutuellement adjacents soit différente de l'autre distance (D2).

6. Véhicule selon l'une quelconque des revendications précédentes, dans lequel un élément de positionnement (43) pour positionner la seconde partie de tête de cylindre (42) par rapport à la première partie de tête de cylindre (41) est prévu sur la première partie de tête de cylindre (41) et/ou la seconde partie de tête de cylindre (42).

7. Véhicule selon l'une quelconque des revendications précédentes, dans lequel une partie de bride (22b) ayant une plus grande dimension extérieure que la partie restante du moyen de détection (22c) est prévue sur l'autre extrémité de la partie de détection du moyen de détection (22a).

8. Véhicule selon la revendication 7, dans lequel une cavité (25b) dans laquelle est reçue la partie de bride (22b) ayant une plus grande dimension extérieure que la partie restante du moyen de détection est prévue sur la première partie de tête de cylindre (25) et/ou la seconde partie de tête de cylindre (17).

9. Véhicule selon l'une quelconque des revendications précédentes, dans lequel une partie de rainure dans laquelle est située une partie du moyen de détection (22d) est prévue sur la première partie de tête de cylindre (25).

10. Véhicule selon l'une quelconque des revendications précédentes, dans lequel le moyen de détection inclut une première partie filetée (22c) sur une périphérie extérieure de cette partie, qui peut être insérée dans le trou (25a),
le trou de la première partie de tête de cylindre inclut une seconde partie filetée (25a) qui s'engage avec la première partie filetée (22c) et
la première partie filetée du moyen de détection (22c) est vissée sur la seconde partie filetée du trou d'insertion (25a), grâce à quoi la première partie filetée (22c) est fixée sur la première partie de tête de cylindre (25).

11. Véhicule selon l'une quelconque des revendications précédentes, dans lequel le dispositif de suspension (50; 60) comprend, en outre, un élément pousseur (54; 67) qui pousse le moyen de détection (22) contre la première partie de tête de cylindre (53; 65) et/ou la seconde partie de tête de cylindre (55; 68).

12. Véhicule selon l'une quelconque des revendications précédentes, comprenant, en outre, un élément d'étanchéité (28) entre le trou de la première partie de tête de cylindre (25a) et le moyen de détection (22).

13. Véhicule selon l'une quelconque des revendications précédentes, dans lequel le dispositif de suspension comprend, en outre, une partie de tige (31) montée, elle, sur la carrosserie de véhicule (3) ou sur la roue (15) et s'étendant dans le corps de cylindre (27), et une partie de piston (30) montée sur cette partie de la partie de tige qui s'étend dans le corps de cylindre (27), et
le moyen de détection (22) fonctionne pour détecter les positions relatives de la partie de la partie de détection (22a) qui est disposée dans le corps de cylindre (27) et de moins la partie de tige (31) et/ou la partie de piston (30).

14. Véhicule selon l'une quelconque des revendications précédentes, dans lequel la roue comprend une roue arrière (15) et
le dispositif de suspension inclut une suspension arrière (16) disposée entre la roue arrière (15) et la carrosserie de véhicule (3).

15. Véhicule selon l'une quelconque des revendications précédentes, dans lequel le support (17a) de la seconde partie de tête de cylindre est monté sur un côté de la roue (15) ou sur un côté de la carrosserie de véhicule (3).

16. Véhicule selon l'une quelconque des revendications précédentes, dans lequel le moyen de détection (22) peut être inséré à travers le trou (25a) dans la première partie de tête de cylindre (25).

17. Dispositif de suspension (16) pour véhicule (1) possédant une roue (15) et une carrosserie (3), adapté pour amortir des forces générées par un mouvement relatif entre la roue (15) et la carrosserie (3), le dispositif de suspension (16) incluant un mécanisme d'amortissement (30), un corps de cylindre (27) qui reçoit le mécanisme d'amortissement (30) et une partie de tête de cylindre (26) montée sur le corps de cylindre (27), et
un moyen de détection (22) dont une partie d'extrémité (22a) est disposée dans le corps de cylindre (27) pour détecter un état du mécanisme d'amortissement (30), et
dans lequel la partie de tête de cylindre (26) comprend
une première partie de tête de cylindre (25) qui ferme une extrémité du corps de cylindre (27) et qui est pourvue d'un trou (25a) à travers lequel une partie du moyen de détection (22) s'étend et
une seconde partie de tête de cylindre (17) incluant un support (17a) adapté pour être monté sur la roue (15) ou sur la carrosserie de véhicule (3) et fixé sur la première partie de tête de cylindre (25) de manière à couvrir une autre partie du moyen de détection (22b, 22c); dans lequel
le moyen de détection (22) comprend
une partie de détection (22a) et
un câblage électrique (22d) connecté à l'autre partie de la partie de détection (22b, 22c) et disposé de manière à s'étendre à l'extérieur du dispositif de suspension (16),
**caractérisé par le fait qu'**au moins une partie du câblage électrique (22d) est située entre la première partie de tête de cylindre (25) et la seconde partie de tête de cylindre (17).

18. Véhicule selon la revendication 1, dans lequel
le trou (25a) est un trou d'insertion (25a) dans lequel le moyen de détection (22) est inséré, et
le support (17a) est monté sur un côté de la roue (15) ou sur un côté de la carrosserie de véhicule (3) et est fixé sur la première partie de tête de cylindre (25) de manière à couvrir l'autre côté d'extrémité du moyen de détection (22b, 22c).
